# FASCICULE DE BREVET EUROPEEN

(11) **EP 1 977 982 B1**
(45) Date de publication et mention de la délivrance du brevet: **30.11.2011**
(21) Numéro de dépôt: 08447017.8
(22) Date de dépôt: 13.03.2008
(51) Int. Cl.: B65G 15/30, F16G 3/10, B41M 3/00, B41M 5/00, B41M 7/00, B29C 59/16

(54) **Procédé pour améliorer la production d'une bande ou courroie transporteuse**
Verfahren zur Produktionssteigerung eines Transport- oder Förderbands
Method for improving the production of a conveyor belt

(30) Priorité: 04.04.2007 BE 200700170
(43) Date de publication de la demande: 08.10.2008
(73) Titulaire: Hahn, André, 1501 Buizingen (BE)
(72) Inventeur: Hahn, André, 1501 Buizingen (BE)
(74) Mandataire: Cauchie, Daniel

(56) Documents cités:
- WO-A-99/41165
- WO-A-2005/021407
- JP-A- 60 226 534
- US-A- 4 879 176
- US-A- 5 596 828
- US-A1- 2003 159 908
- US-A1- 2004 211 653
- US-A1- 2006 044 330
- City Highlights: "powder characteristics", Powder Coating Online , 28 June 2004 (2004-06-28), Retrieved from the Internet: URL:http://replay.waybackmachine.org/20040 628074427/http://www.powdercoatingonline.c om/html/powdercharacteristics.html [retrieved on 2011-03-17]

## Description

La présente invention se rapporte d'une manière générale à un procédé pour améliorer la production d'une bande ou courroie transporteuse.

Plus précisément, l'invention concerne un procédé pour la production d'une bande ou courroie transporteuse réalisée à partir d'une feuille d'un matériau polymérique flexible, dont les extrémités transversales sont refermées en boucle et sont solidarisées entre elles par soudage à haute fréquence et à chaud, l'une des faces de cette feuille étant porteuse de zones de coloration obtenues par impression d'une image numérique ultérieurement protégée par une couche d'un revêtement.

On a décrit dans le brevet US 6 971 504 (demande US 2003/0159908) un procédé de fabrication d'une courroie transporteuse sans fin munie, sur sa face supérieure visible, d'une publicité imprimée, ce procédé comportant notamment une étape d'impression par jets d'encre d'une image numérique. La bande transporteuse est réalisée en un matériau flexible tandis que la face susceptible d'accueillir l'impression est de couleur blanche. Toutefois, aucun matériau de ce type n'est cité dans ce brevet hormis le chlorure de polyvinyle.

Une mise en oeuvre de ce procédé n'a pu montrer cependant que des résultats peu satisfaisants se traduisant par une qualité relative de l'image imprimée et une détérioration de la bande en chlorure de polyvinyle due à un phénomène d'étirement après une utilisation prolongée. D'autre part, la solidarisation entre elles des deux extrémités de la bande donnant naissance à une bande sans fin s'effectue par le biais d'agrafes soudées à un axe commun. Ce système d'attache, qui présente une certaine rigidité, constitue toutefois un élément de faiblesse de la bande sans fin soumise à un usage intensif sous forme de nombreux défilements autour de deux rouleaux support.

D'autre part, on a rapporté dans la demande de brevet WO 2005/021407 un procédé pour la fabrication d'une courroie transporteuse lequel comprend l'utilisation d'une bande porteuse d'une image, cette bande étant recouverte d'un revêtement de polyuréthane.

Par ailleurs, on a décrit dans le brevet US 4 879 176 une méthode pour produire une surface quasi amorphe de polymères semi-cristallins notamment le chlorure de polyvinyle, cette méthode comprenant un traitement irradiant par laser excimère afin d'améliorer l'adhérence d'une encre appliquée sur cette surface. Cependant, aucun revêtement protecteur de l'encre n'y est envisagé.

Toutefois, aucun des procédés de l'état de la technique ne s'est révélé capable d'assurer globalement et d'une manière acceptable, une protection à la fois contre l'abrasion, la détérioration par la lumière ou encore les craquelures susceptibles d'apparaitre sur une telle bande ou courroie tendue sur des rouleaux en rotation.

La présente invention a pour but de proposer un procédé du type indiqué précédemment, capable de pallier ces inconvénients en ce qu'il permet de produire une image imprimée de netteté améliorée et de grande adhérence à la bande ou courroie transporteuse étant donné que cette image est protégée efficacement contre l'abrasion et la détérioration par la lumière.

Pour atteindre ce but, le procédé selon l'invention, du type indiqué précédemment, est caractérisé en ce que :
- la face destinée à recevoir l'impression de zones de coloration subit un traitement irradiant, par laser excimère, de manière à augmenter l'énergie de surface de ladite face, et en ce que :
- la couche de revêtement est constituée d'un vernis en poudre préalablement liquéfié comprenant des résines mixtes époxy et polyester,
   en sorte que la netteté de cette image, qui est protégée contre l'abrasion et la détérioration par la lumière, s'en trouve améliorée.

De manière globale, une bande ou courroie sans fin du type indiqué précédemment notamment du genre bande transporteuse de marchandises desservant un comptoir-caisse, par exemple de supermarché ou de magasin analogue, peut être produite au départ d'une bande non imprimée et non refermée en boucle sans fin moyennant la suite d'étapes ci-dessous :
a) le dégraissage de la bande ou courroie de départ au niveau de la face destinée à recevoir l'impression,
b) le traitement de ladite face de manière à augmenter le pouvoir d'adhérence de l'encre,
c) la création d'une image numérique par exemple une image en relation avec une annonce publicitaire et son stockage sur un milieu approprié,
d) la transmission de cette image numérique à un traceur ou imprimante,
e) l'impression de cette image sur ladite face par formation d'au moins une couche d'encre obtenue par projection de celle-ci, à partir du traceur ou imprimante,
f) le séchage de l'encre utilisée pour l'impression,
g) le recouvrement de ladite face au moyen d'au moins une couche d'un matériau ou d'un mélange de matériaux protecteurs de l'image imprimée,
h) le séchage de la couche de matériaux protecteurs,
i) la solidarisation en boucle des extrémités de la bande ou courroie par soudage à haute fréquence et à chaud en sorte que l'impression de l'image apparaisse sur la face extérieure de ladite bande ou courroie sans fin.

La bande ou courroie de départ est conçue en un matériau polymérique flexible capable de présenter une grande résistance à la traction, à l'abrasion et au vieillissement. A ce titre, le polyuréthane (PU) représente un matériau polymérique de choix.

D'autre part, la face de cette bande ou courroie destinée à recevoir l'impression est plane et de couleur blanche.

En conséquence, selon une autre caractéristique de l'invention, le matériau constitutif de la bande ou courroie en question est, de préférence, le polyuréthane de couleur blanche.

Cette teinte provient habituellement de colorants ou pigments intégrés directement dans la masse. Toutefois, il est possible d'utiliser un matériau dont la teinte à l'origine, par exemple une teinte noire, ne soit pas en accord avec les couleurs de l'impression à réaliser et risque ainsi de modifier la perception de celle-ci. Dans un tel cas,la bande ou courroie recevra sur la face destinée à recueillir l'impression,une couche de matériau opacifiant,par exemple de couleur blanche,de manière à former un fond neutre. A cet effet, il est généralement possible de faire appel à des matériaux capables de subir une réticulation sous rayonnement ultraviolet.

La bande ou courroie ainsi décrite subit, à l'étape a) et en tout état de cause avant toute étape ultérieure de procédé, une opération de dégraissage au moyen de solvants habituellement utilisés à cet effet.

Selon une caractéristique essentielle de l'invention, la surface de la bande ou courroie devant servir de support à l'impression subit à l'étape b), un traitement au moyen d'un faisceau laser. Ce faisceau laser, centré sur une source laser dans l'UV de type excimère, s'est révélé capable de modifier l'état de cette surface jusqu'à produire des changements de microstructures, des modifications chimiques telles que formation de fonctions polaires et une augmentation de la tension superficielle.

Selon la densité d'énergie superficielle ou fluence et le taux de répétition appliqué sur la surface à traiter, l'irradiation laser permet d'obtenir, sur le matériau considéré, une rugosité très fine qui favorise l'ancrage mécanique de l'encre d'impression. D'autre part, ce traitement laser agit également comme une barrière apte à contrôler la pénétration de cette encre dans le matériau en question. En conséquence, il a été observé que l'ensemble de ces propriétés permet d'améliorer de manière très significative la qualité de l'impression de l'image numérique sans provoquer un échauffement du matériau.

Généralement, l'irradiation de la surface du substrat formant la bande ou courroie de départ est effectuée par laser excimère dont la durée de l'impulsion varie de 15 à 55 nanosecondes(ns), ce laser opérant à 193 nm (ArF) ou 248 nm (KrF). Par ailleurs, la densité d'énergie délivrée à cette surface (fluence) sera supérieure à l'énergie seuil permettant une adhérence de l'encre à ce substrat. Cette énergie seuil est habituellement supérieure à environ 10 mjoule/cm2 (mJ/cm2) et peut varier, selon la nature de ce substrat, jusqu'à environ 1000 mJ/cm2 ou davantage. Dans le cas particulier du polyuréthane, par exemple de couleur blanche, l'irradiation est effectuée par laser excimère dont la durée de l'impulsion est de 15 à 25 ns,ce laser opérant, à 193 nm (ArF) ou 248 nm (KrF).Par ailleurs, la fluence sera supérieure à l'énergie seuil capable d'assurer une adhérence importante de l'encre au substrat polyuréthane. Cette énergie seuil est d'environ 13 mJ/cm² pour un laser excimère du type ArF et d'environ 45 mJ/cm² pour un laser excimère du type KrF.
De préférence, le laser excimère utilisé dans le procédé de l'invention est un laser du type ArF.

Dans ces conditions, il a été observé que l'encre d'impression, à l'étape e), préférentiellement une encre à solvant, adhère intimement au substrat polyuréthane 24 h après l'impression, c'est-à-dire à la fin de la période de séchage, alors que sans traitement laser cette encre peut, par grattage, s'éliminer facilement de ce substrat.

Ultérieurement, à l'étape c), on réalise une image numérique des zones de coloration à imprimer et on la stocke sur un milieu habituellement magnétique ou optique. Ces zones de coloration peuvent prendre les formes, aspects et coloration les plus divers. A titre non limitatif, il peut s'agir de lignes, segments de lignes, figures géométriques ou non, signes quelconques d'écriture, motifs décoratifs, dessins colorés ou non, reproductions et montages photographiques, reproductions de tableaux, hologrammes ou analogues.

Selon une mise en oeuvre particulière et préférée, ces zones de coloration produites sur la face extérieure d'une bande ou courroie transporteuse comprennent des mots et/ou des phrases et/ou des données mathématiques et/ou des motifs graphiques prenant la forme, par exemple d'une annonce publicitaire.

Cette image, à l'étape d), est transmise habituellement par une unité de traitement informatique à un traceur ou imprimante à jets d'encre qui en réalise l'impression à l'étape e).Cette impression est effectuée par dépôt d'une ou de plusieurs couches d'une encre, par exemple une encre à séchage par rayonnement ultraviolet, c'est-à-dire à polymérisation ou réticulation, cette encre étant formulée pour assurer une impression durable. Toutefois, l'encre utilisée est préférentiellement une encre à solvant. Celle-ci révèle en effet, dans le cadre du procédé de l'invention, une excellente résistance aux rayons ultraviolets capable de persister pendant plusieurs années et ne nécessite qu'un temps de séchage assez court, environ 24 heures. Une telle encre peut contenir, notamment des pigments et un oligomère de polyuréthane dissous dans un solvant et se composer, à titre d'exemple :
- d'un solvant volatil formé d'un mélange d'hydrocarbures aliphatiques ou naphtaléniques ou aromatiques contenant éventuellement des alcools et des cétones ;
- d'un liant filmogène non volatil (5 à 40%) capable de s'oxydo-polymériser, par exemple résine maléique, phénolique, polystyrène, etc.
- d'un polyuréthane coloré (chromophore polyfonctionnel et polyisocyanate);
- éventuellement d'un pigment pour renforcer la couleur ;
- d'additifs tels qu'agents plastifiants, tensioactifs, antioxydants, biocides, etc.

Une telle composition permet un très bon rendu colorimétrique, le dépôt d'un film d'encre très fin sans perte de qualité colorimétrique et une excellente résistance aux frottements.
La couche d'encre ainsi réalisée est alors séchée à l'étape f) soit par rayonnement ultraviolet, si l'encre en question est prévue à cet effet, soit en présence d' oxygène, par exemple à l'air, si l'encre utilisée est une encre à solvant.

Par la suite, l'image imprimée est recouverte, à l'étape g), d'une couche d'un revêtement apte à protéger celle-ci contre l'abrasion et la détérioration par la lumière. Cette couche de revêtement protecteur est constituée d'un vernis capable d'adhérer à la couche d'encre comme à son support. Il s'agit d'un vernis en poudre comprenant des résines mixtes époxy/polyester. De manière à former une couche uniforme de ce vernis sur l'image imprimée, celui-ci est chauffé au préalable jusqu'à liquéfaction, par exemple à une température de 100°C à 150°C. L'utilisation, comme couche protectrice, d'un vernis liquide à base polyuréthane, ne fait pas partie de l'invention.

Le revêtement protecteur ainsi formé, est ensuite séché, à l'étape h), par rayonnement ultraviolet tandis qu'à l'étape i) la bande ou courroie porteuse de l'image imprimée est refermée en boucle sur elle-même. Les extrémités transversales rapprochées sont alors soudées à haute fréquence et à une température de l'ordre de 160°C à 170°C.

L'invention sera mieux comprise et d'autres buts, caractéristiques et avantages de celle-ci apparaîtront plus clairement au cours de la description explicative qui va suivre faite en référence aux dessins schématiques annexés donnés uniquement à titre d'exemple non limitatif illustrant un mode de réalisation de l'invention et dans lesquels :
- la figure 1 est une représentation en coupe d'un mode de réalisation d'une bande transporteuse selon l'invention ;
- la figure 2 est un bloc diagramme montrant les différentes étapes de procédé jusqu'à la production d'une bande ou courroie transporteuse sans fin.

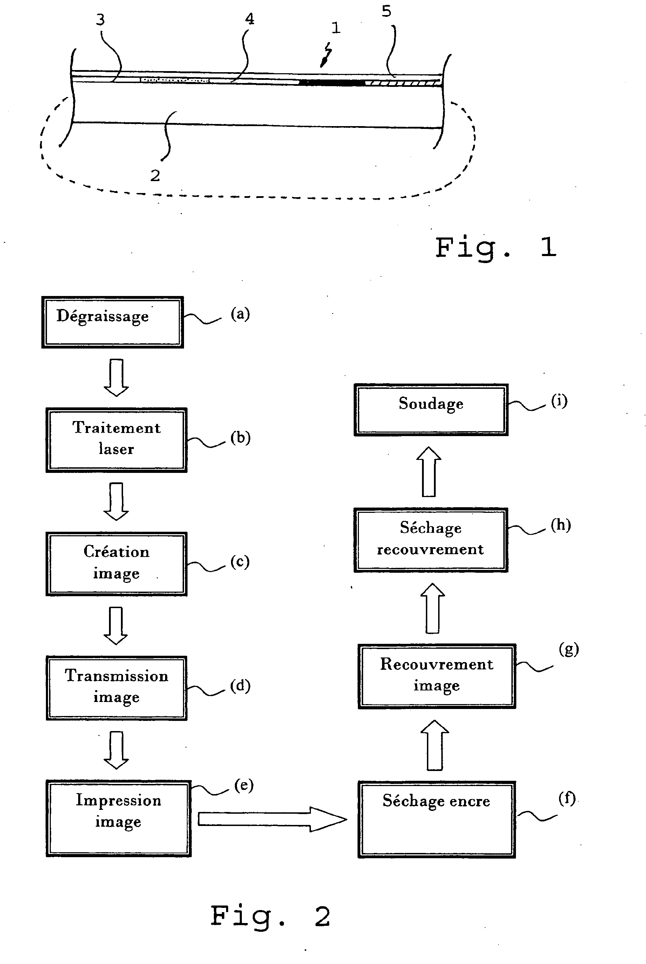

Tel que représenté à la figure 1, la bande 1 destinée à transporter des marchandises vers la caisse d'un comptoir-caisse de supermarché et destinée à recevoir l'impression d'une image formée de zones de coloration représentant par exemple une annonce publicitaire est constituée d'une feuille 2 en polymère thermoplastique habituellement une feuille en polyuréthane. Cette feuille, d'une longueur pouvant atteindre 270m,d'une largeur d'environ 0,70m et d'une épaisseur, selon les cas de 0,0013 à 0,0015m (1,3 à 1,5mm), est avantageusement teintée en blanc dans la masse en sorte que la face 3 destinée à recevoir l'impression de l'image 4 est uniformément de couleur blanche.

Si nécessaire, la face en question est dégraissée au préalable, comme visible en (a) à la figure 2, afin d'éliminer les salissures solides et/ou liquides notamment des résidus gras provenant de la fabrication de la feuille de polymère. A l'étape (b), cette feuille subit alors, au niveau de la face 3 concernée, un traitement par laser excimère du type ArF émettant à 193 nm de façon à créer des modifications de microstructures jusqu'à une profondeur de quelques microns et une augmentation de l'énergie de surface pouvant atteindre 45 à 48 dynes/cm.

A partir de son endroit de stockage, l'image à imprimer, qui est créée à l'étape (c) sous forme numérique, est alors transmise, à l'étape (d), par ordinateur à un traceur qui en réalise une impression, à l'étape (e),sur la face 3 traitée à l'étape (b) précédente. Cette impression est obtenue par le biais de jets de micro-gouttelettes d'une ou de plusieurs encres à solvant formulées pour assurer une impression durable. Alternativement, chaque encre est une encre à séchage par rayonnement ultraviolet dont la formulation est également adaptée pour l'obtention d'une résistance durable de l'impression.

Selon l'impression désirée soit monochrome soit quadrichrome et selon le nombre de têtes à jets d'encre disponibles, par exemple quatre têtes, on effectue le nombre de passages nécessaires du dispositif de dépôt d'encre au-dessus de la face devant supporter l'impression.

La couche d'encre (4) projetée est alors séchée, à l'étape (f), pendant environ 24 heures et sous atmosphère contenant de l'oxygène. Cependant, si l'encre utilisée est à séchage par rayonnement ultraviolet, il sera permis d'effectuer cette opération de séchage à une température suffisamment élevée et pendant un temps suffisamment long. Toutefois, ce temps sera suffisamment court pour ne pas atteindre le point de fusion du substrat polymérique, dans ce cas le polyuréthane. Cette étape peut être suivie, si nécessaire, d'un refroidissement de la feuille dans un courant d'air à une température inférieure ou voisine de la température ambiante. Ce refroidissement permet notamment de préserver la stabilité dimensionnelle de la feuille.

A l'étape (g) suivante, une couche 5 d'un revêtement protecteur incolore est appliquée sur la couche d'encre afin de préserver l'impression de l'image sur la bande. En tout état de cause, la nature de la feuille, celle des encres et celle du revêtement protecteur seront adaptées pour être chimiquement compatibles.

Avantageusement, la couche de revêtement protecteur se présente sous la forme d'un vernis thermodurcissable, qui est un vernis à base de résines mixtes époxy et polyester. L'épaisseur de ce revêtement protecteur peut varier entre 30 et 60 microns. Ce vernis, à l'origine en poudre, est d'abord préchauffé afin de le liquéfier en vue d'en assurer une répartition uniforme sur la face ayant recueilli l'impression. Ce préchauffage est effectué à une température généralement comprise entre 110°C et 150°C et pendant environ 30 à 120 secondes au moyen d'un rayonnement infrarouge.

La couche de vernis protecteur, après dépôt, est alors séchée, à l'étape(h), par passage sous un rayonnement ultraviolet pendant quelques secondes à environ 110°C à 120°C de manière à provoquer une réticulation. Habituellement, on utilise des lampes à mercure dont les longueurs d'onde sont comprises entre 220 et 440 nm.

La feuille, avec image imprimée protégée, est alors sectionnée en une pluralité de portions longitudinales de longueurs appropriées. Les extrémités transversales de chaque portion sont ensuite rapprochées, la face support de l'impression étant située à l'extérieur de la boucle ainsi formée. Ces extrémités sont ensuite soudées, à haute fréquence et à chaud, à l'étape (i), c'est-à-dire à une température de l'ordre de 170°C. On forme de cette façon, une série de bandes transporteuses sans fin imprimées extérieurement et prêtes à être tendues chacune entre deux cylindres d'entraînement suffisamment écartés l'un de l'autre.

Le procédé selon l'invention s'est révélé capable d'influencer très favorablement la qualité de la bande transporteuse sans fin dans son ensemble. Cette influence se manifeste en particulier dans une augmentation significative de la qualité de l'image tant du point de vue de sa netteté que de son adhérence au substrat. Par ailleurs, la réunion par soudure des deux extrémités transversales de la bande s'est montrée supérieure à tout système d'attache faisant intervenir des éléments extérieurs de liaison, ceux-ci constituant une source de faiblesse. D'autre part, cet accroissement de la qualité de l'image imprimée couplé à une solidarisation discrète des extrémités ne faisant pas intervenir de moyens complémentaires visibles et disgracieux concourent à produire une apparence visuelle globale de la bande sans fin nettement améliorée par rapport à l'état de la technique.

## Revendications

1. Procédé pour la production d'une bande ou courroie transporteuse (1), réalisée à partir d'une feuille (2) d'un matériau polymérique flexible, dont les extrémités transversales sont refermées en boucle et sont solidarisées entre elles par soudage à haute fréquence et à chaud, l'une des faces de cette feuille étant porteuse de zones de coloration obtenues par impression d'une image numérique ultérieurement protégée par une couche d'un revêtement (5), **caractérisé en ce que** :
- la face (3) destinée à recevoir l'impression de zones de coloration (4) subit un traitement irradiant, par laser excimère de manière à augmenter l'énergie de surface de ladite face, et **en ce que** :
- la couche de revêtement est constituée d'un vernis en poudre préalablement liquéfié comprenant des résines mixtes époxy et polyester,
en sorte que la netteté de cette image, qui est protégée contre l'abrasion et la détérioration par la lumière, s'en trouve améliorée.

2. Procédé selon la revendication 1, **caractérisé en ce que** le matériau polymérique est le polyuréthanne.

3. Procédé selon la revendication 1 ou 2, **caractérisé en ce que** la face destinée à recevoir l'impression est de couleur blanche.

4. Procédé selon la revendication 1 à 3, **caractérisé en ce que** la densité d'énergie fournie par le laser excimère est supérieure à 10mJ/cm2.

5. Procédé selon l'une des revendications 1 à 4, **caractérisé en ce que** le laser excimère est du type ArF émettant à 193 nm.

6. Procédé selon l'une des revendications 1 à 4, **caractérisé en ce que** le laser excimère est du type KrF émettant à 248 nm.

7. Procédé selon l'une des revendications 1 à 6, **caractérisé en ce que** les zones de coloration comprennent des mots et/ou des phrases et/ou des données mathématiques et/ou des motifs graphiques prenant la forme d'une annonce publicitaire.

8. Procédé selon l'une des revendications 1 à 7, **caractérisé en ce que** l'impression de l'image est réalisée par formation d'au moins une couche d'encre (4) obtenue par projection de celle-ci à partir d'un traceur ou imprimante.

9. Procédé selon la revendication 8, **caractérisé en ce que** l'encre est une encre à solvant.

10. Procédé selon la revendication 9, **caractérisé en ce que** l'encre se compose :
• d'un solvant volatil formé d'un mélange d'hydrocarbures aliphatiques ou naphtaléniques ou aromatiques contenant éventuellement des alcools et des cétones ;
• d'un liant filmogène non volatil capable de s'oxydo-polymériser ;
• d'un polyuréthane coloré ;
• éventuellement d'un pigment pour renforcer la couleur ;
• d'additifs choisis parmi des agents plastifiants, tensioactifs, antioxydants et biocides.

11. Procédé selon l'une des revendications 1 à 10, **caractérisé en ce que** la couche de revêtement est séché par rayonnement ultraviolet.

12. Procédé selon l'une des revendications 1 à 11, **caractérisé en ce que** le soudage des extrémités transversales est effectué à une température de l'ordre de 160°C à 170°C.

## Claims

1. A method for producing a conveyor belt (1), made from a sheet (2) of a flexible polymeric material, the transverse ends of which are closed in a loop and are made integral with each other by high frequency hot welding, one of the faces of this sheet carrying colouring areas obtained by printing a digital image subsequently protected by a layer of a coating (5), **characterised in that**:
- the face (3) for receiving the printing of colouring areas (4) undergoes an irradiating treatment, by an excimer laser so as to increase the surface energy of said face, and **in that**:
- the coating layer is made of a beforehand liquefied powder varnish comprising epoxy and polyester mixed resins,
whereby the sharpness of this image, which is protected from abrasion and degradation through light, is improved.

2. The method according to claim 1, **characterised in that** the polymeric material is polyurethane.

3. The method according to claim 1 or 2, **characterised in that** the face for receiving the printing is of white colour.

4. The method according to claims 1 to 3, **characterised in that** the energy density provided by the excimer laser is higher than 10 mJ/cm².

5. The method according to claims 1 to 4, **characterised in that** the excimer laser is of the ArF type emitting at 193 nm.

6. The method according to one of claims 1 to 4, **characterised in that** the excimer laser is of the KrF type emitting at 248 nm.

7. The method according to one of claims 1 to 6, **characterised in that** the colouring areas comprise words and/or sentences and/or mathematical data and/or graphical patterns having the form of an advertisement.

8. The method according to one of claims 1 to 7, **characterised in that** the printing of the image is performed by forming at least one ink layer (4) obtained by projection thereof from a plotter or printer.

9. The method according to claim 8, **characterised in that** the ink is a solvent ink.

10. The method according to claim 9, **characterised in that** the ink is made up of:
• a volatile solvent consisting of a mixture of aliphatic or naphthalenic or aromatic hydrocarbons optionally containing alcohols and ketones;
• a non-volatile film forming binder capable of oxido-polymerising;
• a coloured polyurethane;
• optionally a pigment for enhancing the colour;
• additives selected from plasticisers, surfactants, antioxidants and biocides.

11. The method according to one of claims 1 to 10, **characterised in that** the coating layer is dried by ultraviolet radiation.

12. The method according to one of claims 1 to 11, **characterised in that** the welding of transverse ends is performed at a temperature in the order of 160°C to 170°C.

## Patentansprüche

1. Verfahren zur Herstellung eines Bandes oder eines Transportbandes (1) aus einem Bogen (2) aus einem elastischen polymeren Material, dessen transversale Enden ringförmig geschlossen und untereinander durch Hochfrequenzschweißen mit Erwärmung verbunden sind, wobei eine der Seiten dieses Bogens als Träger für farbige Zonen dient, die durch Bedrucken mit einem digitalen Bild erhalten werden, welches nachträglich durch eine Deckschicht (5) geschützt wird, **dadurch gekennzeichnet, dass**:
- die zur Aufnahme der Bedruckung mit farbigen Zonen (4) vorgesehene Seite (3) einer Bestrahlung mit einem Excimerlaser unterzogen wird, um die Oberflächenenergie dieser Seite zu erhöhen,
und **dadurch** dass:
- die Deckschicht aus einem Pulverlack besteht, welcher zuvor verflüssigt wurde und gemischte Epoy- und Polyester-Harze enthält,
so dass die Schärfe dieses Bildes, welches gegen Abrieb und Schädigung durch Sonneneinstrahlung geschützt ist, verbessert wird.

2. Verfahren gemäss Anspruch 1, **dadurch gekennzeichnet, dass** es sich bei dem polymeren Material um Polyurethan handelt.

3. Verfahren gemäss Anspruch 1 oder 2, **dadurch gekennzeichnet, dass** die für den Empfang der Bedruckung vorgesehene Seite weiß gefärbt ist.

4. Verfahren gemäss Anspruch 1 bis 3, **dadurch gekennzeichnet, dass** die durch den Excimerlaser abgegebene Energiedichte größer als 10 mJ/cm² ist.

5. Verfahren gemäss einem der Ansprüche 1 bis 4, **dadurch gekennzeichnet, dass** der Excimerlaser vom Typ ArF ist und bei 193 nm emittiert.

6. Verfahren gemäss einem der Ansprüche 1 bis 4, **dadurch gekennzeichnet, dass** der Excimerlaser vom Typ KrF ist und bei 248 nm emittiert.

7. Verfahren gemäss einem der Ansprüche 1 bis 6, **dadurch gekennzeichnet, dass** die farbigen Zonen Wörter und/oder Sätze und/oder mathematische Daten und/oder grafische Formen umfassen, welche in Form einer Werbeanzeige gestaltet sind.

8. Verfahren gemäss einem der Ansprüche 1 bis 7, **dadurch gekennzeichnet, dass** der Druck des Bildes durch die Bildung von mindestens einer Farbschicht (4) hergestellt wird, welche durch Aufspritzen dieser Farbschicht durch einen Plotter oder Drucker erhalten wird.

9. Verfahren gemäss Anspruch 8, **dadurch gekennzeichnet, dass** die Farbe eine lösungsmittelhaltige Farbe ist.

10. Verfahren gemäss Anspruch 9, **dadurch gekennzeichnet, dass** die Farbe aus:
- einem flüchtigen Lösungsmittel, welches durch eine Mischung von aliphatischen oder naphtalenischen oder aromatischen Kohlenwasserstoffen gebildet wird, die gegebenenfalls Alkohole und Ketone enthalten;
- einem nicht flüchtigen, filmbildenden Bindemittel, welches zur oxydativen Polymerisierung geeignet ist;
- einem gefärbten Polyurethan;
- gegebenenfalls einem Pigment zur Verstärkung der Farbe;
- Zusätzen, ausgewählt unter Weichmachern, Tensiden, Antioxidationsmitteln und Bioziden,
besteht.

11. Verfahren gemäss einem der Ansprüche 1 bis 10, **dadurch gekennzeichnet, dass** die Deckschicht durch UV-Strahlung getrocknet wird.

12. Verfahren gemäss einem der Ansprüche 1 bis 11, **dadurch gekennzeichnet, dass** das Verschweißen der transversalen Enden bei einer Temperatur im Bereich von 160 °C bis 110 °C durchgeführt wird.
